# EUROPEAN PATENT APPLICATION

(11) **EP 3 401 187 A1**
(43) Date of publication of application: **14.11.2018**
(21) Application number: 18168819.3
(22) Date of filing: 23.04.2018
(51) Int. Cl.: B62B 1/08, B65F 1/14

(54) **WHEELED CART AND METHOD OF MANUFACTURING THEREOF**

(30) Priority: 24.04.2017 US 201762489000 P
(71) Applicant: IPL INC., St-Damien Bellechasse, Québec G0R 2Y0 (CA)
(72) Inventor: LABRECQUE, Jean-Gabriel, St-Damien, Québec G0R 2Y0 (CA); NOLET, Roch, St-Joseph, Québec G0S 2V0 (CA)
(74) Representative: Regimbeau

(57) **Abstract**

The invention relates to a wheeled cart, comprising a body (12) supported by at least one wheel (18) connected to the body (12) by at least one sleeve (60, 62, 70, 72, 74), said at least one sleeve (60, 62, 70, 72, 74) extending on at least part of a width of a wall (14) of said body (12), said at least one sleeve (60, 62, 70, 72, 74) supporting a wheel axle (X) on a length of said at least one sleeve (60, 62, 70, 72, 74) on said at least part of the width of the wall (14), said wheel axle (X) mounting said at least one wheel (18).

The invention further relates to a method for making a wheeled cart, the method comprising molding a body (12), said molding a body (12) comprising molding at least one sleeve (60, 62, 70, 72, 74) integrally on at least part of a width of a wall (14) of the body (12); supporting a wheel axle (X) on a length of the at least one sleeve (60, 62, 70, 72, 74) on the at least part of the width of the wall (14); and mounting at least one wheel (18) to the axle (X).

## Description

### FIELD OF THE DISCLOSURE

The present disclosure relates to wheeled carts. More specifically, the present disclosure is concerned with a wheeled cart and a method of manufacturing thereof.

### BACKGROUND OF THE DISCLOSURE

A wheeled cart typically comprises a hollow body supported on the ground by a pair of wheels, connected to the body by a wheel mounting portion near a bottom end thereof.

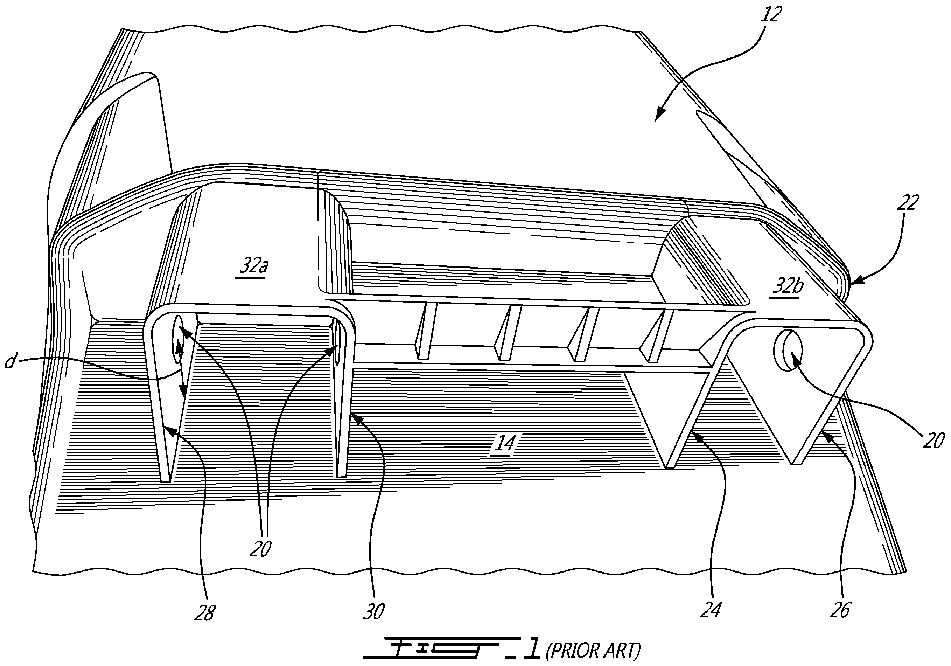

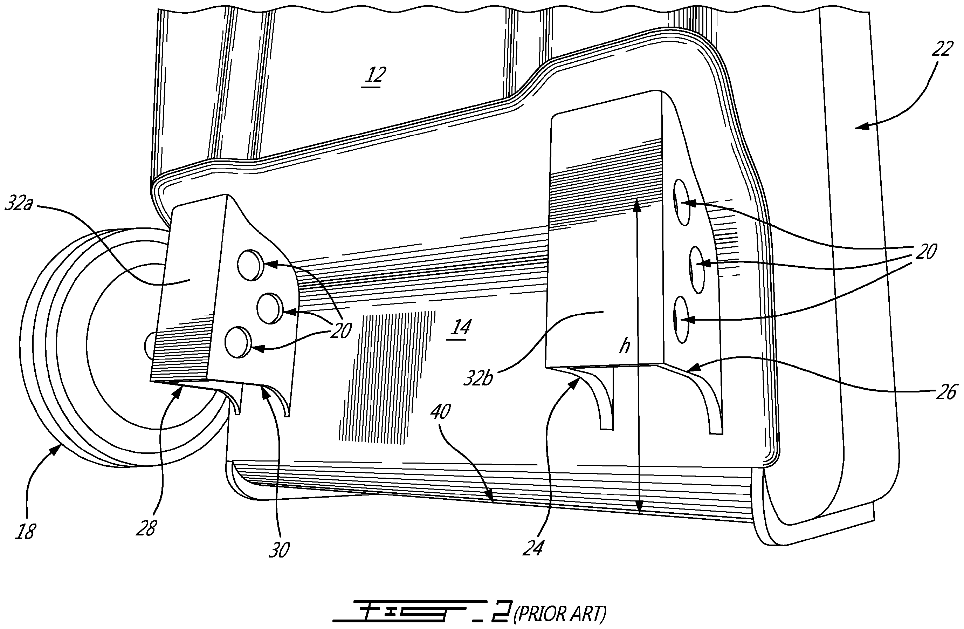

As shown in FIGs.1 and 2 for example, the mounting portion 22 comprises facing ribs 24, 26 extending generally perpendicular from the rear wall 14 of the cart body 12 on a first side (right hand side in FIGs.1 and 2 for example) of the rear wall 14 of the cart body 12, and facing ribs 28, 30 extending generally perpendicular from the rear wall 14 of the cart body 12 on a second side of the rear wall 14 (see left hand side in FIGs.1 and 2 for example) of the cart body 12. The ribs are reinforced by a wall 32a, 32b generally parallel to the rear wall 14 of the cart body 12 and joining the facing ribs 24, 26 and 28, 30 together. Each rib comprises at least one axle bore 20 at a distance d from the rear wall 14 of the cart body 12 and at a height h from a bottom edge of the rear wall 14 of the cart body 12 so that the axle bores of the ribs 24, 26 and 28, 30 are aligned along a generally horizontal direction, i.e. parallel to the bottom edge 40 of the cart, so as to receive an axle (not shown) that mounts wheels (not shown) to the cart body 12 on each side thereof.

FIG. 2 shows ribs 24, 26 and 28, 30 each comprising three axle bores 20, each at different distances from the rear wall 14 of the cart body 12 and at different heights from the bottom edge 40 of the rear wall 14 of the cart body 12, thereby allowing accommodating three different wheel diameters.

There is a need in the art for a wheeled cart and a method of fabrication thereof.

### SUMMARY OF THE INVENTION

More specifically, in accordance with the present disclosure, there is provided a wheeled cart as defined in claim 1 and corresponding depending claims. In particular, there is provided a wheeled cart comprising a body supported by at least one wheel connected to the body by at least one sleeve, the at least one sleeve extending on at least part of a width of a wall of the body, the at least one sleeve supporting a wheel axle on a length of the at least one sleeve on the at least part of the width of the wall, the wheel axle mounting said at least one wheel.

There is further provided a method for making a wheeled cart as defined in claim 12 and corresponding depending claims. In particular, there is provided a method comprising molding at least one sleeve integrally on at least part of a width of a wall of a body; supporting a wheel axle on a length of the at least one sleeve on the at least part of the width of the wall; and mounting at least one wheel to the axle.

### BRIEF DESCRIPTION OF THE DRAWINGS

In the appended drawings:
FIG. 1 shows a mounting portion of a wheeled cart as known in the art;
FIG. 2 shows a mounting portion of a wheeled cart as known in the art;
FIG. 3 shows a mounting portion of a wheeled cart according to an embodiment of an aspect of the present disclosure;
FIG. 4 shows a mounting portion of a wheeled cart according to an embodiment of an aspect of the present disclosure;
FIG. 5 shows a mounting portion of a wheeled cart according to an embodiment of an aspect of the present disclosure;
FIG. 6 shows the inside of a wheeled cart according to an embodiment of an aspect of the present disclosure; and
FIG. 7 shows a curb test standard.

### DESCRIPTION OF ILLUSTRATIVE EMBODIMENTS

The present disclosure is illustrated in further details by the following non-limiting examples.

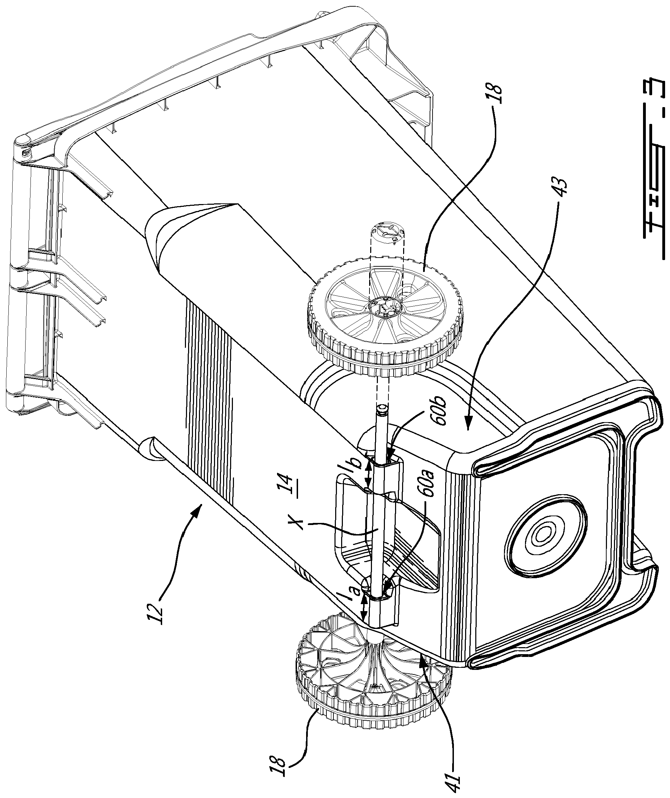

A cart according to an embodiment of an aspect of the present disclosure is shown in FIGs. 3 to 6 for example.

A shown in FIGs. 3 to 5, the rear wall 14 of the cart body 12 comprises at least one sleeve 60.

The sleeve extends on at least part of a width of a wall, typically the real wall 14 of the body, i.e. on at least part of a length of the rear wall 14 between one lateral edge 41 of the rear wall 14 and the opposite lateral edge 43 of the rear wall 14, the sleeve being generally parallel to the bottom edge 40 of the cart, thereby supporting the wheel axle (X) on the length of the sleeve.

It may be contemplated using a single wheel, generally supported in the middle of the real wall 14 between the lateral edge 41 and the opposite lateral edge 43 of the rear wall 14 of the body for example.

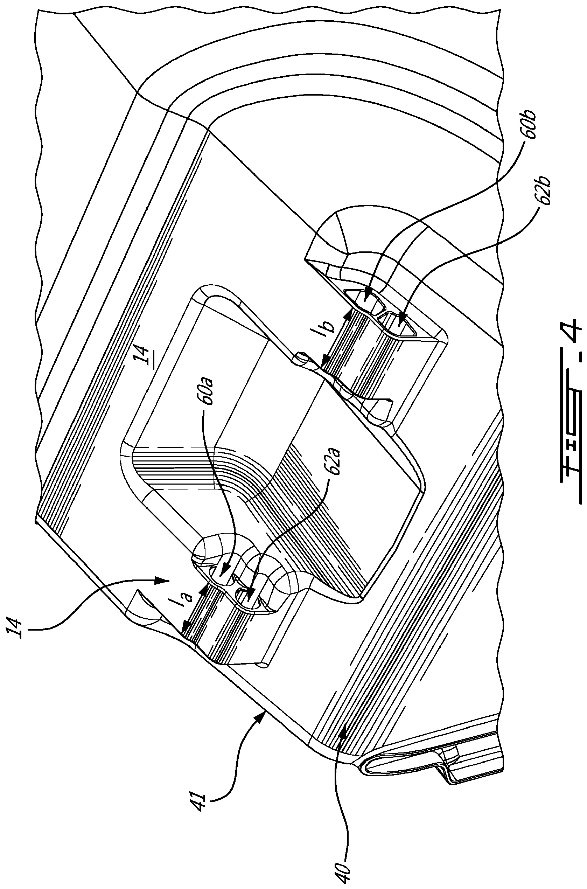

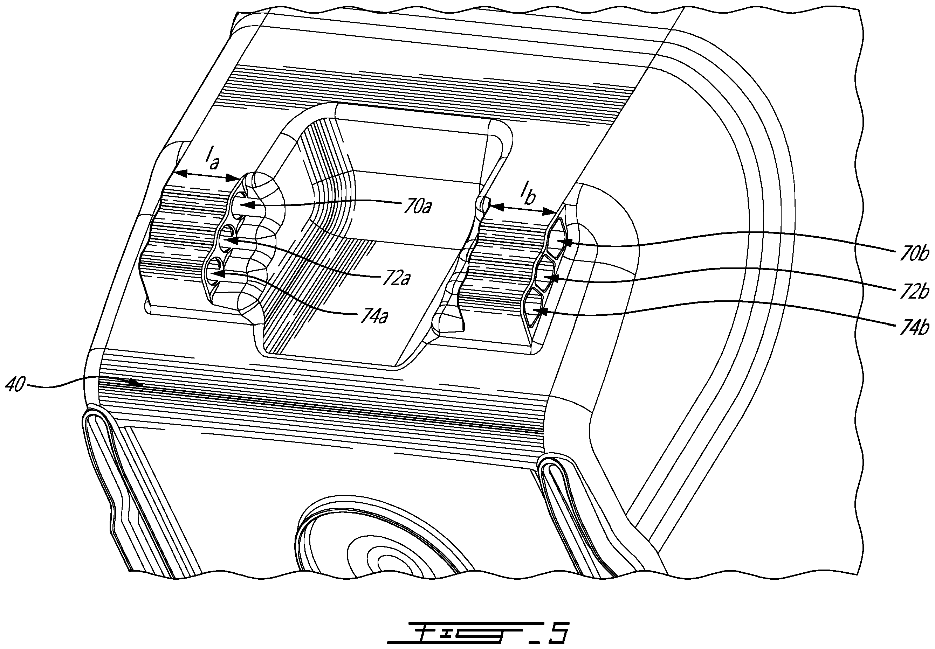

In FIG. 3, a first sleeve 60a of a length Ia is shown on the left-hand side of the rear wall 14, i.e. near the lateral edge 41 of the rear wall 14, and a second sleeve 60b of a length Ib is shown on the right-hand side of the rear wall 14 (as seen from the rear of t the cart). The first sleeve 60a and the second sleeve 60b are aligned, i.e. they are on a same line with respect to the bottom edge 40 of the cart for supporting an axle therethrough, the axle supporting a side wheel 18 on each free end thereof for example. Typically, the first sleeve 60a and the second sleeve 60b are aligned generally parallelly to the bottom edge 40 of the cart, i.e. on a same line generally parallel to the bottom edge 40 of the cart, for supporting wheels of a same diameter. In FIGs. 4 and 5, multiple sleeves, i.e. positioned at different heights from the bottom edge 40 of the cart body, are shown for multiple wheel diameters. For wheels of a different diameter on a same axle, it might be considered providing one sleeve at an angle relative to the bottom edge of the body, or two sleeves aligned along a line inclined relative to the bottom edge of the body, so as to support an inclined axle.

FIG. 4 shows an example with two sleeves 60, 62, thus allowing accommodating two wheel diameters, each one of the two sleeves 60, 62 being discontinued, with sleeve portions 60a, 62a and 60b, 62b near each edge 41 and 43 respectively of the rear wall 14, each sleeve 60, 62 at a height from the bottom edge of the cart for supporting the wheel axle (not shown) of wheels (not shown) of a corresponding diameter on a length Iₐ, I_{b} thereof on each side of the rear wall 14 respectively, depending on the size of the cart, the diameter of the wheel axle and the thickness of the walls of the sleeves and of the rear wall 14. Depending on the use of the cart and of the nature of the content it is intended to receive, i.e. on the weight the container may reach when used to its full inside capacity, the size of the sleeves may be varied. Also, a single sleeve generally centered on the rear wall 14 and aligned the bottom the bottom edge 40 of the cart, may be used.

In FIG. 5, each one of three sleeves 70, 72 and 74 at different heights from the bottom edge of the cart is discontinued, i.e. with sleeve portions 70a, 72a, 74a and 70b, 72b and 74b on each side respectively of the rear wall 14, each sleeve 70, 72 and 74 adapted for supporting the wheel axle (not shown) of wheels (not shown) of a corresponding diameter, for example 12", 10" and 8" as shown, on a length Iₐ, I_{b} thereof on each side of the rear wall 14 respectively, for example on at least on 20 mm, for example on about 50 mm, depending on the size of the cart, the diameter of the wheel axle and the thickness of the walls of the sleeves and of the rear wall 14, as well as the use of the cart.

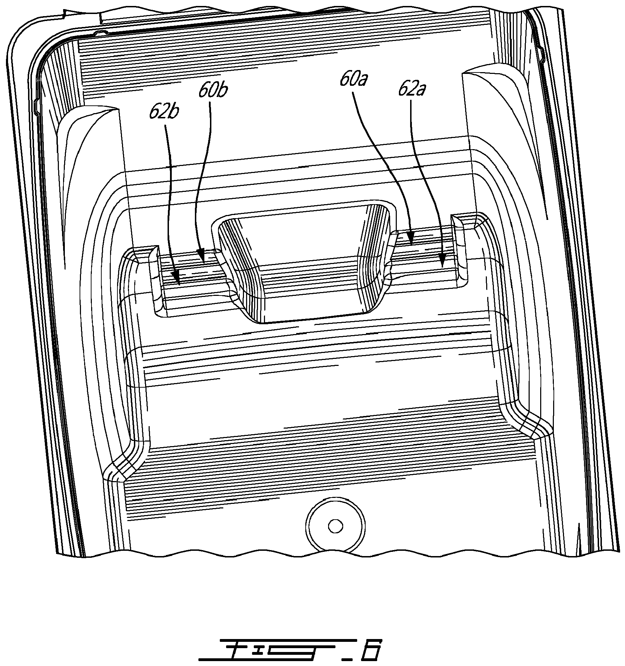

As best seen in FIG. 6 showing the inside of the cart of FIG. 3, the sleeves form part of the rear wall 14 of the cart, i.e. they are integrally molded with the wall of the body of the cart.

According to an aspect of an embodiment of a method of the present disclosure, the rear wall 14 is injected molded, at least one metallic rod being placed in the mold part of the rear wall before, during or after closing the mold before injection, and then removed before opening of the mold, thereby forming a sleeve. Positioning the rod or rods prior to mold closing may be selected to save cycle time.

A number of comparative mechanical resistance tests were made, on carts as known in the art as illustrated for example in FIGs. 1 and 2, and on carts of the present disclosure as illustrated for example in FIG. 5.

In the case of the carts as known in the art as illustrated for example in FIGs. 1 and 2, as the rear wall 14 of the container deforms outwards under the pressure of the content of the container during impact tests shearing occur between the rear wall 14 and the rigid ribs 24, 26, 28 and 30 at the foot of the ribs 24, 26, 28 and 30, the rear wall 14 tears off at the foot of the ribs 24, 26, 28 and 30. In contrast, in the case of the carts of the present disclosure as illustrated for example in FIG. 5 for example, no tearing or permanent deformation occurs, as the rear wall 14 and the sleeve portions thereon flexibly accommodate the outward deformation.

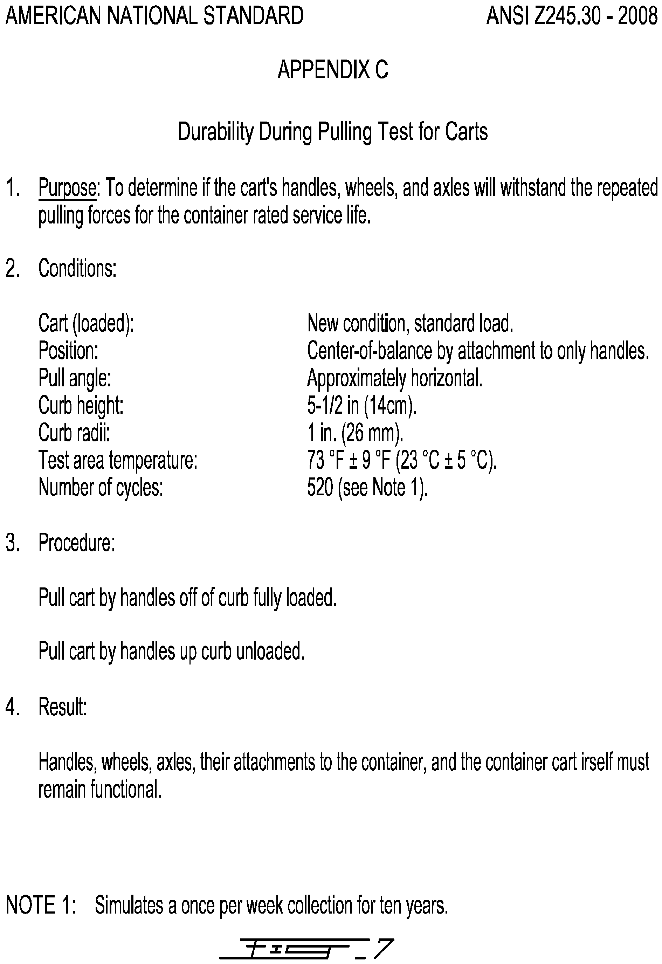

A test is used to determine if handles, wheels and axles of a cart can withstand repeated pulling forced over the cart rated service life (see FIG. 7). After the test, the axle bores 20 of the carts as illustrated for example in FIGs. 1 and 2, initially circular, were deformed into ovoid, whereas in the case of the carts as illustrated for example in FIG. 5 for example, when using the middle sleeves 72b and 72a, i.e. 10" wheels, no deformation could be seen as a result of the test.

The disclosed mounting portion comprising sleeves providing a surface supporting the wheel axle, while the cart bottom, i.e. its body a part below the mounting portion down to the bottom edge of the cart, has a smooth surface free of ribs or walls that would rigidify the cart bottom thereby weakening the cart bottom in terms of impact especially at low temperatures. The present cart bottom is thus resistant to impacts.

The scope of the claims should not be limited by the embodiments set forth in the examples, but should be given the broadest interpretation consistent with the description as a whole.

## Claims

1. A wheeled cart, comprising a body (12) supported by at least one wheel (18) connected to the body (12) by at least one sleeve (60, 62, 70, 72, 74), said at least one sleeve (60, 62, 70, 72, 74) extending on at least part of a width of a wall (14) of said body (12), said at least one sleeve (60, 62, 70, 72, 74) supporting a wheel axle (X) on a length of said at least one sleeve (60, 62, 70, 72, 74) on said at least part of the width of the wall (14), said wheel axle (X) mounting said at least one wheel (18).

2. The wheeled cart of claim 1, wherein said sleeve (60) comprises a first sleeve (60a) and a second sleeve (60b) on a same line with respect to a bottom edge (40) of the body (12).

3. The wheeled cart of claim 1, wherein said sleeve (60) comprises a first sleeve (60a) and a second sleeve (60b) on a same line generally parallel to a bottom edge (40) of the body (12).

4. The wheeled cart of any one of claims 1 to 3, wherein said sleeve comprises a first sleeve (60) at a first height from a bottom edge (40) of the body (12) and a second sleeve (62) at a second height from said bottom edge (40).

5. The wheeled cart of any one of claims 1 to 4, wherein said sleeve (60, 62, 70, 72, 74) is generally centered on said wall (14) between a first lateral edge (41) of said wall (14) and a second lateral edge (43) of said wall (14).

6. The wheeled cart of any one of claims 1 to 5, wherein said axle (X) supports a side wheel (18) on each free end thereof.

7. The wheeled cart of any one of claims 1 to 6, wherein said axle (X) supports a wheel (18) on each free end thereof.

8. The wheeled cart of any one of claims 1 to 6, wherein said axle (X) supports at least one wheel (18) between a first lateral edge of said wall (14) and a second lateral edge of said wall (14).

9. The wheeled cart of claim 1, wherein said sleeve comprises a first sleeve (60a) and a second sleeve (60b), said first sleeve (60a) having a first length (la), and said second sleeve (60b) having a second length (lb), said first and second sleeves (60a, 60b) being on a same line generally parallel to a bottom edge (40) of the body (12), said first sleeve (60a) supporting said axle (X) on said first length (la), and said second sleeve (60b) supporting said axle (X) on said second length (Ib).

10. The wheeled cart of claim 1, wherein said sleeve comprises a first sleeve (60,60a, 60b) at a first height from a bottom edge (40) of the body (12) and a second sleeve (62, 62a, 62b) at a second height from said bottom edge (40), said first sleeve (60, 60a, 60b) configured to support over a length thereof an axle (X) mounting at least one wheel (18) of a first diameter, and said second sleeve (62, 62a, 62b) configured to support over a length thereof an axle (X) mounting at least one wheel (18) of a second diameter.

11. The wheeled cart of any one of claims 1 to 10, wherein said sleeve (60, 62, 70, 72, 74) is integrally molded with said wall (14).

12. A method for making a wheeled cart, the method comprising molding a body (12), said molding a body (12) comprising molding at least one sleeve (60, 62, 70, 72, 74) integrally on at least part of a width of a wall (14) of the body (12); supporting a wheel axle (X) on a length of the at least one sleeve (60, 62, 70, 72, 74) on the at least part of the width of the wall (14); and mounting at least one wheel (18) to the axle (X).

13. The method of claim 12, wherein said molding the at least one sleeve (60, 62, 70, 72, 74) comprises placing, in the mold part of the wall (14) of the body (12), at least one rod, before, during or after closing the mold before injection, and removing the at least one rod before opening of the mold, thereby forming the at least one sleeve (60, 62, 70, 72, 74).

14. The method of claim 12, comprising molding a first sleeve (60a) of a first length (la) and a second sleeve (60b) of a second length (lb) on a same line generally parallel to a bottom edge (40) of the body (12), and said mounting at least one wheel (18) to the axle (X) comprises mounting at least one wheel (18); inserting a wheel axle (X) within the first and the second sleeve (60a, 60b), the first sleeve (60a) supporting the wheel axle (X) over the first length (la) and the second sleeve (60b) supporting the axle (X) of the second length (lb).

15. The method of claim 12, comprising molding a first sleeve (60) at a first height from a bottom edge (40) of the body (12) and a second sleeve (62) at a second height from the bottom edge (40) of the body (12).
